# FASCICULE DE BREVET EUROPEEN

(11) **EP 3 632 005 B1**
(45) Date de publication et mention de la délivrance du brevet: **17.02.2021**
(21) Numéro de dépôt: 18724914.9
(22) Date de dépôt: 24.05.2018
(51) Int. Cl.: H04B 7/185

(54) **RÉSEAU INTERMÉDIAIRE COMPOSÉ DE STATIONS PLACÉES SUR DES PLATEFORMES À HAUTE ALTITUDE POUR SYSTÈME DE RADIOCOMMUNICATIONS**
ZWISCHENNETZWERK, BESTEHEND AUS STATIONEN, DIE SICH AUF HÖHENPLATTFORMEN BEFINDEN, FÜR EIN FUNKKOMMUNIKATIONSSYSTEM
INTERMEDIATE NETWORK COMPOSED OF STATIONS LOCATED ON HIGH-ALTITUDE PLATFORMS FOR A RADIOCOMMUNICATIONS SYSTEM

(30) Priorité: 01.06.2017 FR 1700586
(43) Date de publication de la demande: 08.04.2020
(73) Titulaire: THALES, 92400 Courbevoie (FR)
(72) Inventeur: GAYRARD, Jean-Didier, 31100 Toulouse (FR)
(74) Mandataire: Marks & Clerk France
(86) Numéro de dépôt international: PCT/EP2018/063603
(87) Numéro de publication internationale: WO 2018/219765

(56) Documents cités:
- EP-A2- 0 837 567
- US-A1- 2015 236 778
- US-A1- 2017 033 455
- Tine Celcer et al.: "Network architectures exploitng multiple HAP costellations for load balancing", WSEAS TRANSACTIONS ON COMMUNICATIONS, 1 mars 2008 (2008-03-01), pages 160-169, XP002778157, Extrait de l'Internet: URL:https://www.researchgate.net/publicati on/228766073_Network_Architectures_Exploit ing_Multiple_HAP_Constellations_for_Load_B alancing?ev=prf_high [extrait le 2018-02-09]

## Description

Le domaine de l'invention est celui des réseaux intermédiaires des systèmes de radiocommunications terrestres.

L'invention porte sur un réseau intermédiaire pour un système de radiocommunications. Le réseau intermédiaire est basé sur des stations placées sur des plateformes à haute altitude mises en réseau et des stations sol connectées au réseau cœur de l'opérateur de télécommunications. L'invention est destinée, par exemple, à déployer de façon compétitive des réseaux d'accès radio large bande dans des grandes zones à faible densité de population ne bénéficiant pas d'infrastructure de communications.

Un réseau intermédiaire (backhaul network en anglais) est un réseau de télécommunications transportant des données entre un réseau d'accès radio et un réseau cœur de l'opérateur de réseau de radiocommunications. Le réseau d'accès radio (ou Radio Access Network RAN en anglais) connecte les terminaux utilisateurs aux stations de base par des liaisons radiofréquences. Le réseau intermédiaire connecte les stations de base aux équipements passerelle qui interfacent les réseaux cœur par des liaisons de communication qui sont soit des liaisons sur fibres optiques, sur câbles métalliques, par faisceaux hertziens ou par liaisons satellitaires.

Le terme « station » désigne un équipement comprenant un ou plusieurs émetteurs ou récepteurs, ou un ensemble d'émetteurs et de récepteurs, y compris les appareils accessoires, nécessaires pour assurer un service de communication en un emplacement donné. Une « station placée sur une plateforme à haute altitude » (HAPS en anglais pour High Altitude Platform Station) désigne une station installée sur un objet placé à une altitude élevée, par exemple au-dessus de 18 km et en un point spécifié, nominal, fixe par rapport à la Terre. Une « station sol » désigne une station destinée à assurer une liaison de communication avec une station placée sur une plateforme à haute altitude. Une « station de base » désigne une station destinée à assurer des liaisons radiofréquences avec des terminaux utilisateur mobiles ou fixes.

Un des principaux challenges dans le déploiement d'un système de radiocommunications terrestres dans une région qui a peu ou pas d'infrastructures de télécommunications, comme des réseaux à fibres optiques ou à câbles métalliques, est le déploiement du réseau intermédiaire entre les stations de base dispersées dans la région au plus près des utilisateurs et les équipements de passerelle réseau qui interfacent le réseau cœur de l'opérateur, situés près d'une dorsale Internet (backbone en anglais).

Un problème à résoudre pour ce type de systèmes d'accès à un réseau cœur consiste à concevoir une solution permettant de relier toutes les stations de base distantes à la passerelle réseau par une infrastructure de communication large bande à faible coût en terme d'investissement initial, de coût d'opérations et de maintenance, préférablement à faible latence et fiable.

Une première solution pour déployer un réseau intermédiaire est de connecter toutes les stations de base distantes à une passerelle réseau par un réseau de fibres optiques ou de câbles métalliques. Cette solution présente l'inconvénient d'un coût très élevé en terme d'investissement initial si le réseau de fibres optiques ou de câbles n'existe pas ou qu'en partie.

Une deuxième solution consiste à connecter toutes les stations de base distantes à une passerelle réseau par un réseau de faisceaux hertziens. Une liaison à faisceau hertzien est établie en visibilité directe entre deux stations terminales habituellement placées sur des mâts ou des points hauts. Cette liaison a une portée variant de 10 à 50 km selon le profil du terrain. La distance opérationnelle des faisceaux hertziens dépasse très rarement une quarantaine de kilomètres du fait de la rotondité de la terre (distance à l'horizon). La connexion des stations de base éloignées de plus de 50 km de la passerelle réseau nécessite des liaisons en plusieurs bonds, demandant l'installation et l'entretien de plusieurs stations relais sur des mâts ou des points hauts.

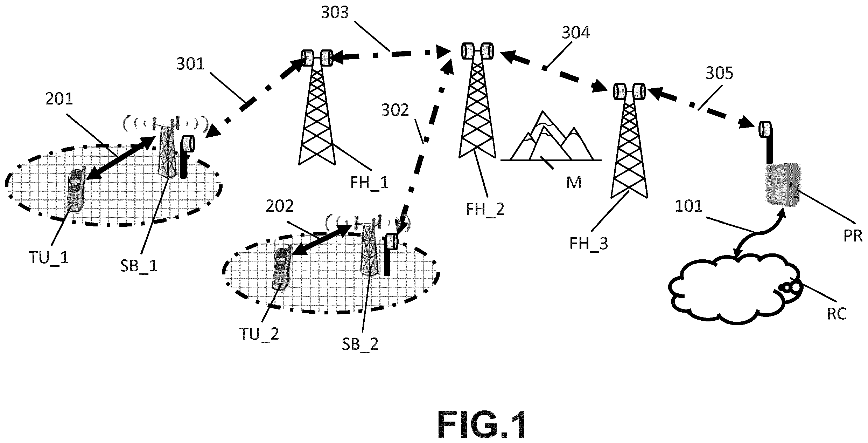

La figure 1 représente un exemple d'un réseau intermédiaire utilisant des liaisons par faisceaux hertziens selon l'état de l'art. Ce réseau intermédiaire comprend plusieurs stations de base distantes SB_1,SB_2 équipées de moyens pour établir une liaison de communication bidirectionnelle à faisceaux hertziens 301,302 avec un réseau de stations relai FH_1,FH_2,FH_3. Ces stations relai FH_1,FH_2,FH_3 sont reliées entre-elles et avec une passerelle réseau PR par des liaisons à faisceaux hertziens 303,304,305. Les terminaux mobiles ou fixes TU_1,TU_2 sont reliés aux stations de base SB_1,SB_2 par des liaisons radiofréquences 201,202. La passerelle réseau PR interface un réseau cœur RC par une liaison de communication 101.

La solution décrite sur la figure 1, utilisant des faisceaux hertziens présente l'inconvénient d'être onéreuse en termes d'investissement initial, de coût d'opérations et de maintenance des stations relai. Cette solution n'est plus économiquement viable lorsque la distance séparant la station de base de la passerelle réseau est trop importante (typiquement supérieure à 50 km) ce qui est le cas dans le déploiement d'un système de radiocommunications dans une grande zone géographique.

Une troisième solution consiste à connecter toutes les stations de base distantes à la passerelle réseau en utilisant des liaisons par satellite. Les stations de base sont alors équipées d'une station terrienne destinée à communiquer avec un satellite, de préférence un satellite géostationnaire. La passerelle réseau est également équipée d'une station terrienne. Le coût de cette solution est indépendant des distances entre les stations de base et la passerelle réseau mais dépend proportionnellement du nombre de stations de base à connecter et des débits de données à échanger. Outre un coût d'investissement et de maintenance élevé des stations terriennes, cette solution présente l'inconvénient d'un coût annuel très élevé en termes de location de capacité satellite (transpondeur), ce qui la rend économiquement non viable sur le long terme. De plus cette solution souffre d'une longue latence (typiquement supérieure à 0.3 seconde) due aux délais de transmission sur la liaison aller-retour entre le sol et le satellite géostationnaire. Cette latence est un inconvénient majeur dans les applications temps réel comme les jeux vidéo multi-joueurs et une gêne pour les conversations téléphoniques.

On connait par ailleurs les solutions décrites dans les documents US 2015/236778, EP0837567, US2017/033455 et Tine Celcer et al : « Network architectures exploiting multiple HAP constellations for load balancing ».

L'invention propose un réseau intermédiaire pour un système de radiocommunications, le réseau intermédiaire comprenant une ou plusieurs stations placées sur des plateformes à haute altitude pour connecter un ensemble de stations de base distantes à une ou plusieurs passerelle(s) réseau embarquées à bord de plateformes à haute altitude pour interfacer un réseau coeur. Les plateformes à haute altitude sont mises en réseau au moyen de liaisons de communications, par exemple des liaisons optiques en espace libre à haut débit. L'invention propose également de connecter des stations de base distantes positionnées hors de la zone de couverture des stations placées sur des plateformes à haute altitude via, par exemple, des stations relai de faisceau hertzien ou des stations de base en bord de la zone de couverture.

L'invention propose une solution compétitive et à faible latence pour le déploiement d'un réseau intermédiaire sur une vaste zone géographique, par rapport aux solutions de l'état de l'art basées sur des réseaux intermédiaires utilisant la fibre optique, les faisceaux hertziens ou des satellites géostationnaires.

L'invention propose une solution robuste et disponible. La mise en réseau des stations placées sur des plateformes à haute altitude peut être réalisée au moyen de liaisons optiques en espace libre, par exemple des liaisons laser à très haut débit. Le système selon l'invention comprend un organe de routage à bord des stations placées sur des plateformes à haute altitude qui est commandé par un centre de contrôle du réseau pour mettre en œuvre différentes fonctionnalités.

Par exemple, une technique de diversité de site peut être mise en œuvre entre toutes les stations sol du réseau intermédiaire, contribuant à l'augmentation de la disponibilité des liaisons entre stations sol et stations placées sur des plateformes à haute altitude.

L'organe de routage peut re-router le trafic de données d'une station sol indisponible vers une station sol fonctionnelle et disponible, contribuant à l'augmentation de la robustesse du réseau intermédiaire aux pannes.

L'organe de routage peut également répartir dynamiquement le trafic de données entre toutes les stations sol, contribuant à la robustesse du réseau intermédiaire aux surcharges locales et temporaires du trafic.

L'invention a pour objet un réseau intermédiaire pour système de radiocommunications comprenant :
- au moins une première station au sol adapté pour établir une liaison de communication avec un réseau cœur,
- une pluralité de stations de base au sol,
- au moins une station placée sur une plateforme à haute altitude, configurée pour faire communiquer ladite au moins une première station au sol avec au moins une station de base au sol,
- au moins une passerelle réseau embarquée dans ladite au moins une station placée sur une plateforme à haute altitude,
ladite au moins une station placée sur une plateforme à haute altitude comprenant un organe de routage pour établir au moins une route permettant à une station de base au sol de communiquer avec une première station au sol via une station placée sur une plateforme à haute altitude, au moins une station placée sur une plateforme à haute altitude étant adaptée pour établir une liaison de communication avec une autre station placée sur une plateforme à haute altitude, ladite liaison de communication étant une liaison optique en espace libre.

Selon un aspect particulier de l'invention, chaque station de base au sol est adaptée pour établir une liaison de communication bidirectionnelle avec au moins un terminal utilisateur de manière à ce que ledit terminal utilisateur puisse établir un accès au réseau cœur via le réseau intermédiaire.

Selon un aspect particulier de l'invention, ladite au moins une station placée sur une plateforme à haute altitude est adaptée pour établir au moins une liaison de communication avec ladite au moins une première station au sol et au moins une liaison de communication avec au moins une station de base.

Selon un aspect particulier de l'invention, ladite liaison de communication entre ladite au moins une station placée sur la plateforme à haute altitude stationnaire et ladite au moins une première station au sol est une liaison optique en espace libre.

Selon un aspect particulier de l'invention, ladite liaison de communication entre ladite au moins une station placée sur la plateforme à haute altitude et ladite au moins une station de base est une liaison radiofréquence ou une liaison optique en espace libre.

Selon un aspect particulier de l'invention, ladite au moins une station placée sur une plateforme à haute altitude comprend un commutateur pour activer au moins une liaison de communication avec l'autre station placée sur une plateforme à haute altitude lorsque la liaison de communication entre ladite au moins une station placée sur la plateforme à haute altitude et ladite au moins une première station au sol est inopérante.

Selon un aspect particulier de l'invention, au moins une première station de base est configurée pour établir au moins une liaison de communication avec au moins une seconde station de base lorsque ladite au moins une première station de base n'est pas en portée d'une station placée sur une plateforme à haute altitude.

Selon un aspect particulier de l'invention, ladite au moins une liaison de communication entre deux stations de base est une liaison de communication par faisceau hertzien, ou par fibre optique ou par câble métallique.

Selon un aspect particulier de l'invention, au moins une station de base est adaptée pour établir une liaison de communication directe avec un réseau cœur.

Selon un aspect particulier de l'invention, ladite au moins une plateforme à haute altitude est un aérostat équipé de moyens de propulsion pour rester stationnaire autour d'un point spécifié, nominal et fixe par rapport à la Terre.

Selon un aspect particulier de l'invention, ledit organe de routage est commandé par un centre de contrôle de réseau via le réseau cœur et le réseau intermédiaire.

L'invention a aussi pour objet un système de radiocommunications comprenant un réseau cœur, une pluralité de terminaux et un réseau intermédiaire selon l'invention, pour permettre auxdits terminaux d'accéder au réseau cœur.

D'autres caractéristiques et avantages de la présente invention apparaîtront mieux à la lecture de la description qui suit en relation aux dessins annexés qui représentent :
- La figure 1, un schéma d'un exemple de système de radiocommunications selon l'art antérieur basé sur un réseau intermédiaire utilisant des liaisons par faisceaux hertziens,
- La figure 2, un schéma d'un exemple de système de radiocommunications comprenant un réseau intermédiaire basé sur des stations placées sur des plateformes à haute altitude, selon l'invention,
- La figure 3, un schéma d'une partie d'un système de radiocommunications comprenant un réseau intermédiaire selon l'invention dans une première configuration d'application particulière, illustrant l'accès au réseau intermédiaire de stations de base hors de la couverture des stations placées sur des plateformes à haute altitude,
- La figure 4, un schéma d'une partie d'un système de radiocommunications comprenant un réseau intermédiaire selon l'invention illustrant les avantages de robustesse et de disponibilité du réseau intermédiaire,
- La figure 5, un schéma d'un exemple de charge utile ou station placée sur une plateforme à haute altitude selon l'invention,
- La figure 6, un exemple d'un réseau intermédiaire selon l'invention déployé en Australie.

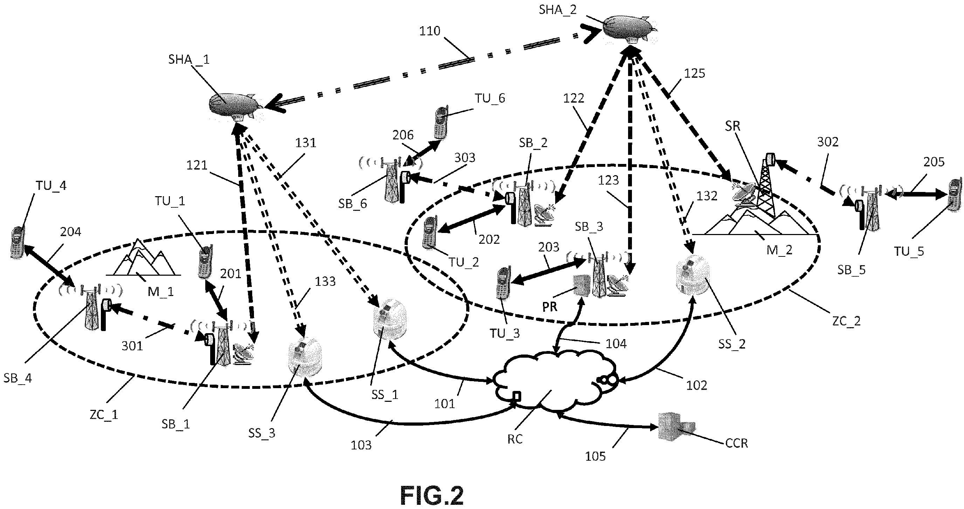

La figure 2 représente un exemple d'un système de radiocommunications comprenant un réseau intermédiaire selon un mode de réalisation de l'invention. Le système de radiocommunications décrit à la figure 2 comprend un réseau intermédiaire basé sur des stations placées sur des plateformes à haute altitude mises en réseau selon l'invention. Le réseau intermédiaire permet de faire communiquer des stations de base avec des stations sol qui fournissent l'accès à un réseau cœur. Les terminaux utilisateurs accèdent au réseau cœur à partir des stations de base.

Ainsi, le réseau intermédiaire selon l'invention comprend :
- une ou plusieurs stations placées sur une ou plusieurs plateformes à haute altitude SHA_1,SHA_2 reliées entre-elles par des liaisons de communications à haut débit 110, par exemple des liaisons optiques en espace libre, et chacune équipée d'un organe de routage,
- plusieurs stations sol SS_1,SS_2,SS_3 qui interfacent le réseau cœur RC par une liaison de communication 101,102,103 et qui communiquent avec au moins une station placée sur une plateforme à haute altitude SHA_1,SHA_2 par une liaison de communication 131,132,133, par exemple une liaison optique en espace libre,
- une pluralité de stations de base SB_1,SB_2,SB_3,SB_4,SB_5,SB_6 qui interfacent le réseau intermédiaire par une liaison de communication 121,122,123,301,125,302,303.

Chaque station placée sur une plateforme à haute altitude communique avec au moins une station sol SS_1,SS_2,SS_3 positionnée dans sa zone de couverture ZC_1,ZC_2 et avec les stations de base SB_1 ,SB_2,SB_3 positionnées dans sa zone de couverture ZC_1,ZC_2.

Une station sol SS_1,SS_2,SS_3 est une station comprenant d'une part des moyens pour communiquer avec une station placée sur une plateforme à haute altitude, par exemple un terminal optique et un émetteur/récepteur associé, et d'autre part des moyens pour interfacer le réseau cœur par des liaisons de communication 101,102,103 par exemple des liaisons par câbles. La liaison de communication 131,132,133 entre une station placée sur une plateforme à haute altitude stationnaire SHA_1,SHA_2 et une station sol SS_1,SS_2,SS_3 est préférablement une liaison optique en espace libre ou une liaison radiofréquence.

Selon l'invention, une fonction de passerelle réseau est réalisée directement dans une plateforme à haute altitude stationnaire SHA_1,SHA_2. Les stations SS_1,SS_2,SS_3 sont limitées à de simples stations au sol qui ont pour rôle d'interfacer physiquement les liaisons de communication 131,132,133 avec le réseau cœur RC.

Une passerelle réseau a notamment pour fonction de réaliser une conversion protocolaire pour interfacer la liaison de communication 131,132,133 avec le réseau cœur RC qui est par exemple un réseau IP. Autrement dit, la fonction de passerelle réseau réalisée par une plateforme à haute altitude stationnaire consiste à convertir les données et messages reçus via la liaison 131,132,133 selon un protocole compatible d'une liaison optique en espace libre ou d'une liaison radiofréquence vers des données et messages directement exploitables par un réseau IP.

Eventuellement la passerelle réseau comprend un serveur proxy et un serveur cache.

Une station de base SB_1,SB_2,SB_3 est une station au sol comprenant d'une part des moyens pour communiquer avec une station placée sur une plateforme à haute altitude SHA_1,SHA_2, en particulier une antenne et un émetteur/récepteur associé, et d'autre part des moyens pour communiquer avec un ensemble de terminaux utilisateur mobiles ou fixes TU_1,TU_2,TU_3 par des liaisons radiofréquences, selon par exemple le standard de communication mobile 4G/LTE ou tout autre standard de télécommunication radiofréquence. Eventuellement, une station de base SB_1 ,SB_2 comprend des moyens de communication avec une autre station de base SB_4,SB_6. Eventuellement, une station de base SB_3 comprend des moyens de communication pour interfacer le réseau cœur RC.

Le réseau intermédiaire selon l'invention comprend plusieurs stations de base SB_1,SB_2,SB_3 dispersées dans la zone de couverture ZC_1,ZC_2 qui communiquent avec des terminaux utilisateur TU_1,TU_2,TU_3 par des liaisons radiofréquences 201,202,203. Chaque terminal utilisateur TU_1,TU_2,TU_3 accède à une station de base SB_1,SB_2,SB_3 qui est à sa portée via une liaison radiofréquence 201,202,203 puis accède au réseau cœur RC via le réseau intermédiaire.

Dans un mode de réalisation particulier de l'invention, le réseau intermédiaire selon l'invention comprend également plusieurs stations de base SB_5,SB_6 situées hors de la zone de couverture ZC_1,ZC_2 d'une station placée sur une plateforme à haute altitude et qui communiquent avec des terminaux utilisateur TU_5,TU_6 par des liaisons radiofréquences 205,206. Chaque station de base SB_5,SB_6 hors de la zone de couverture ZC_1,ZC_2 est connectée au réseau intermédiaire via une station de base SB_2 en visibilité de la station placée sur une plateforme à haute altitude SHA_1,SHA_2 ou via une station relai de faisceau hertzien SR en visibilité de la station placée sur une plateforme à haute altitude SHA_1,SHA_2. Une telle station de base SB_2 est adaptée pour router les flux de données provenant ou à destination des stations de base SB_5,SB_6 hors de la zone de couverture vers/depuis une station placée sur une plateforme à haute altitude SHA_1 ,SHA_2.

Le réseau intermédiaire selon l'invention comprend éventuellement des stations de base SB_4 qui sont dans la zone de couverture ZC_1, ZC_2 mais qui ne sont pas en visibilité d'une plateforme à haute altitude du fait de la présence d'un obstacle géographique M_1. L'obstacle M_1 peut être dû au relief du terrain ou à une configuration locale du terrain ou à un immeuble. La station de base SB_4 est reliée à la station de base SB_1 par une liaison 301 à faisceau hertzien ou par fibre optique ou par câble. Chaque station de base SB_4 accède au réseau intermédiaire via une station de base SB_1 en visibilité de la station placée sur une plateforme à haute altitude SHA_1 ,SHA_2.

Une station placée sur une plateforme à haute altitude SHA_1 peut établir trois types de liaisons de communication. Premièrement, elle communique avec la station sol SS_1,SS_3 située dans sa zone de couverture ZC_1 par une liaison optique en espace libre 131,133. Deuxièmement, elle communique avec toutes les stations de base SB_1,SB_2,SB_3 situées dans sa zone de couverture ZC_1 par une liaison radiofréquence ou optique en espace libre 121,122,123. Troisièmement, elle communique avec au moins une autre station placée sur une plateforme à haute altitude SHA_2 par une liaison optique en espace libre 110.

Chaque station placée sur une plateforme à haute altitude SHA_1,SHA_2 est équipée d'un organe de routage des données transportées par les différentes liaisons de communication 110, 121,122,123,124,131,132,133 mises en œuvre par la station SHA_1,SHA _2. L'organe de routage est commandé par un centre de contrôle de réseau CCR via le réseau cœur RC, via les stations sol SS_1,SS_2,SS_3 et via les stations placées sur une plateforme à haute altitude SHA_1,SHA_2. L'organe de routage établit des routes pour le trafic de données entre les stations de base SB_1 ,SB_2,SB_3 et les stations sol SS_1,SS_2,SS_3 via les stations placées sur des plateformes à haute altitude SHA_1,SHA_2.

La plateforme à haute altitude est, par exemple, un aérostat. La plateforme à haute altitude est équipée de moyens de propulsion, typiquement un moteur à hélice, pour compenser la force des vents et rester stationnaire dans le ciel autour d'un point spécifié, nominal et fixe par rapport à la Terre. La zone de couverture ZC_1,ZC_2 est la zone géographique d'où la plateforme stationnaire à haute altitude est visible du sol avec une élévation positive, par exemple 5 degrés. Ainsi, par exemple, une plateforme stationnaire à haute altitude volant à 20 km d'altitude permet une visibilité avec une élévation de 5 degrés dans une zone de couverture d'un rayon de 194 km. Le choix de l'altitude de vol est relativement contraint par la présence de vents violents dans la stratosphère. Toutefois, entre 18 et 25 km d'altitude, les vents stratosphériques sont plus faibles (typiquement inférieurs à 20 m/s) et ce domaine d'altitudes est donc choisi pour positionner les plateformes à haute altitude.

Dans un mode de réalisation particulier de l'invention, au moins une station de base SB_3 comprend une fonctionnalité de passerelle réseau et des moyens de communication pour interfacer le réseau cœur RC par une liaison de communication 104.

Le réseau intermédiaire selon l'invention permet de connecter toutes les stations de base distantes SB_1 ,SB_2,SB_3,SB_4 situées dans la zone de couverture ZC_1,ZC_2 à au moins une station sol SS_1,SS_2,SS_3. Il permet également de connecter toutes les stations de base distantes SB_5,SB_6 hors de la zone de couverture ZC_1,ZC_2 à au moins une station sol SS_1,SS_2,SS_3.

Le réseau intermédiaire selon l'invention permet ainsi d'aider à déployer un système de radiocommunications sur une large zone géographique pour offrir des services de téléphonie mobile et d'accès large bande à Internet à des terminaux utilisateur fixes ou mobiles avec une latence similaire à celle des réseaux intermédiaires à base de faisceaux hertziens et avec une latence inférieure à celle des réseaux intermédiaires à base de liaisons satellite. Il permet de déployer un réseau intermédiaire disponible et robuste aux pannes et aux pics de trafic.

Selon une variante de réalisation de l'invention également illustrée à la figure 2, une station de base SB_3 peut être équipée d'une passerelle réseau PR pour connecter une station de base distante SB_1,SB_2,SB_4,SB_5,SB_6 au réseau cœur RC. Lors du déploiement des stations de base, certaines stations de base peuvent être voisines d'un point d'accès au réseau cœur ou d'une dorsale Internet. Ces stations de base SB_3 sont avantageusement équipées d'une passerelle réseau PR pour interfacer le réseau cœur RC et des moyens pour établir une liaison de communication bidirectionnelle 123 avec une station placée sur une plateforme à haute altitude SHA_2. Les communications entre la station de base SB_1,SB_2,SB_4,SB_5,SB_6 et le réseau cœur RC transitent par une station placée sur une plateforme à haute altitude SHA_1 ,SHA_2 et la station de base SB_3 équipée d'une passerelle réseau PR.

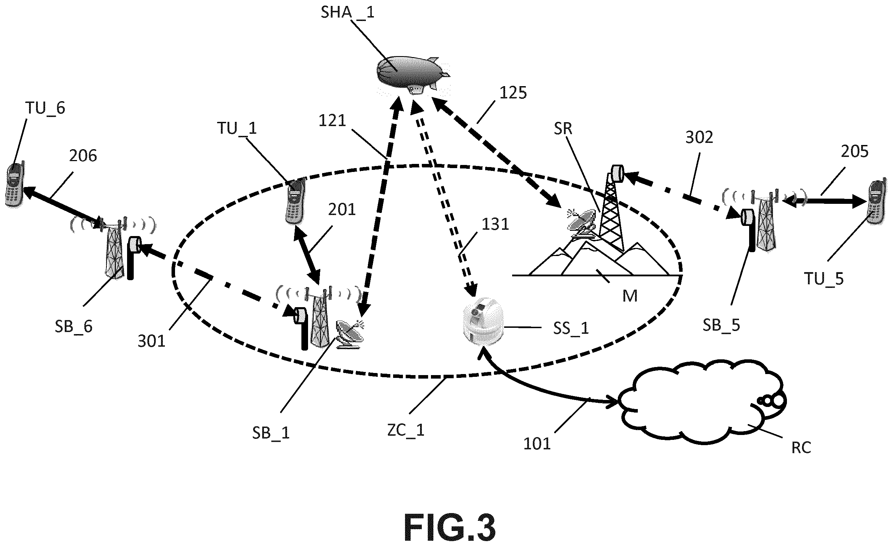

La figure 3 illustre un cas d'utilisation de l'invention permettant de connecter au réseau cœur une station de base distante SB_5,SB_6 qui n'est pas dans la zone de couverture ZC_1 de la station placée sur une plateforme à haute altitude SHA_1, c'est-à-dire hors de visibilité de la station. La station de base distante SB_6 est reliée à une station de base SB_1 située dans la zone de couverture ZC_1 en visibilité de la station placée sur une plateforme à haute altitude SHA_1 par une liaison à faisceau hertzien 301. La liaison par faisceau hertzien 301 peut comprendre plusieurs bonds. Les communications entre la station de base SB_6 et le réseau cœur RC transitent par la station de base SB_1, la station placée sur une plateforme à haute altitude SHA_1 et la station sol SS_1. Bien entendu, la liaison de communication 301 entre les stations de base distantes SB_1,SB_6 peut être aussi une liaison par fibre optique ou par câble métallique.

Toujours sur la figure 3, on a représenté un autre cas d'utilisation qui concerne la station de base SB_5. Cette station SB_5 n'est pas en visibilité d'une station de base située dans la zone de couverture ZC_1. La station de base distante SB_5 est reliée à une station relai SR en visibilité de la plateforme à haute altitude SHA_1 par une liaison à faisceau hertzien 302. La station relai SR est équipée de moyens pour établir une liaison de communication bidirectionnelle 125 avec la station placée sur une plateforme à haute altitude SHA_1. La station relai SR est avantageusement placée sur un point haut M_2 pour être en visibilité de la station de base SB_5 et de la station placée sur une plateforme à haute altitude SHA_1. Les communications entre la station de base SB_5 et le réseau cœur RC transitent par la station relai SR, la station placée sur une plateforme à haute altitude SHA_1 et la station sol SS_1. Bien entendu, la liaison par faisceau hertzien 302 peut comprendre plusieurs bonds.

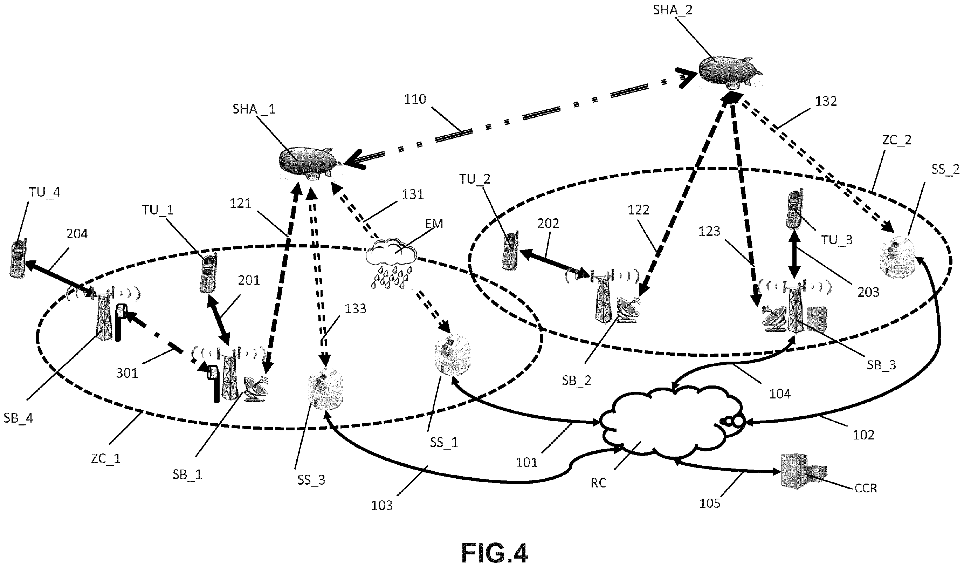

La figure 4 illustre les avantages de robustesse et de disponibilité du réseau intermédiaire selon l'invention. Chaque station placée sur une plateforme à haute altitude SHA_1 est pourvue d'un dispositif pour établir un lien de communication 110 avec une autre station placée sur une plateforme à haute altitude SHA_2 et d'un organe de routage ou routeur. La liaison 110 entre deux stations placées sur des plateformes à haute altitude est une liaison optique en espace libre. La liaison 110 peut être utilisée pour mettre en œuvre une technique de diversité de site entre toutes les stations sol SS_1,SS_2,SS_3 et les stations de base équipées d'une passerelle réseau SB_3. Par exemple, si la liaison 131 est coupée ou inopérante à cause d'un évènement météorologique EM (nuages ou averse orageuse) qui affecte les transmissions entre ces deux équipements, une liaison 110 entre la station placée sur une plateforme à haute altitude SHA_1 et une autre station placée sur une plateforme à haute altitude SHA_2 est utilisée pour accéder au réseau cœur RC via une autre station sol SS_2. Bien entendu, si la liaison 132 entre la station placée sur une station placée sur une plateforme à haute altitude SHA_2 et la station sol SS_2 est inopérante, une autre liaison est utilisée, par exemple la liaison 133 entre la station placée sur une plateforme à haute altitude SHA_1 et la station sol SS_3 ou la liaison 123 entre la station placée sur une plateforme à haute altitude SHA_2 et la station de base équipée d'une passerelle réseau SB_3.

Les liaisons entre une station placée sur une plateforme à haute altitude et une station située au sol sont sensibles aux phénomènes de blocage, d'atténuation et de distorsion des signaux dus aux nuages et aux intempéries (pluie, neige, grêle...) et elles ont donc une disponibilité limitée. La technique de diversité de site consiste à choisir une liaison opérante parmi toutes les liaisons entre toutes les stations placées sur des plateformes à haute altitude et toutes les stations au sol. On introduit Pi_j la disponibilité de la liaison « i_j » entre une station placée sur une plateforme à haute altitude SHA_i et une station sol SS_j. La technique de diversité de site permet d'obtenir une disponibilité globale du réseau intermédiaire P égale à 1 - Π*_{i,j}*(1- *P_{i_j}*) multipliée par la disponibilité de la liaison 110. La liaison 110 présente une excellente disponibilité (>99.99%) et ne dégrade pas la disponibilité globale P. En effet, la liaison 110 est une liaison air-air entre deux stations placées sur des plateformes à haute altitude qui stationnent, par exemple, dans la stratosphère ou, de façon plus générale, dans une zone de l'atmosphère située au-dessus des nuages et des intempéries (pluie, neige, grêle...). Dans l'exemple de la figure 4, si la disponibilité des trois liaisons 131 «1_1», 132 «2_2» et 133 «1_3» est 80%, la disponibilité globale du réseau intermédiaire est 99.2%.

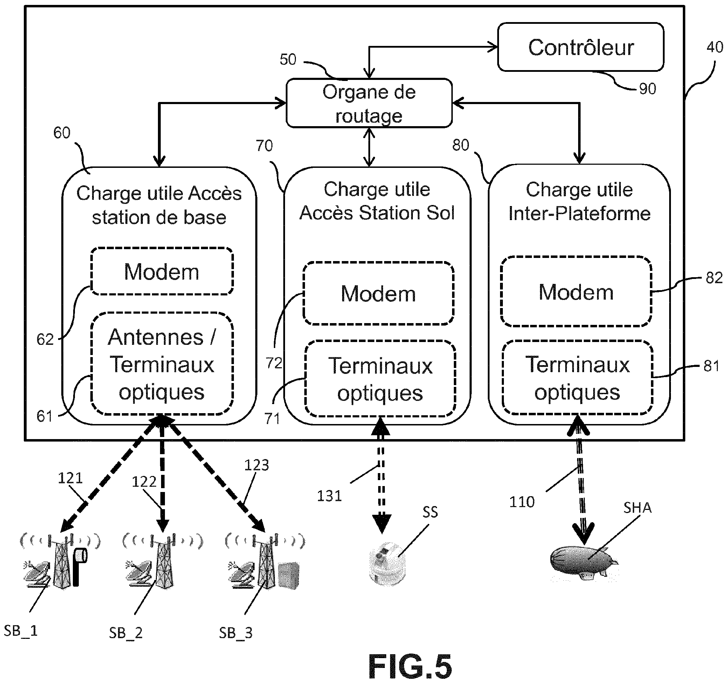

La figure 5 schématise un exemple de charge utile ou station d'une plateforme à haute altitude SHA_1,SHA_2 selon un mode de réalisation de l'invention. La charge utile 40 comprend une charge utile « accès station de base » 60 qui comprend un dispositif pour établir une ou plusieurs liaisons bidirectionnelles 121,122,123 avec au moins une station de base SB_1,SB_2,SB_3, une charge utile « accès station sol » 70 qui comprend un dispositif pour établir une ou plusieurs liaisons bidirectionnelles 131 avec au moins une station sol SS, une charge utile « Inter-Plateformes » 80 qui comprend un dispositif pour établir une ou plusieurs liaisons bidirectionnelles 110 avec au moins une station placée sur une plateforme à haute altitude stationnaire SHA, un organe de routage 50 et un équipement de contrôle 90.

La charge utile « accès station de base » 60 comprend un ensemble d'antennes ou de terminaux optiques 61 aptes à établir une liaison bidirectionnelle radiofréquence ou optique 121,122,123 avec des stations de base distantes SB_1,SB_2,SB_3 et un ensemble de modulateurs/ démodulateurs 62. La charge utile « accès station de base » 60 est connectée à l'organe de routage 50 afin de router le trafic de données des stations de base vers la charge utile « accès station sol » 70 et la charge utile « Inter-Plateformes » 80. Les liaisons de communication optiques sont des liaisons en espace libre et sont mises en œuvre, par exemple, au moyen de lasers infrarouges. Les liaisons radiofréquences utilisent, par exemple, le standard DVB-S2 de communication par satellite de l'ETSI ou tout autre standard de communication radiofréquence.

La charge utile « accès station sol » 70 comprend un ensemble de terminaux optiques 71 aptes à établir des liaisons bidirectionnelles optiques 131 avec au moins une station sol SS et un ensemble de modulateurs/démodulateurs 72. La charge utile « accès station passerelle » 70 est connectée à l'organe de routage 50 afin de router le trafic de données des stations sol vers la charge utile « accès station de base » 60 et la charge utile « Inter-Plateformes » 80.

La charge utile « Inter-Plateformes » 80 comprend au moins un terminal optique 81 apte à établir une liaison bidirectionnelle optique 110 avec au moins une autre plateforme à haute altitude stationnaire SHA, et au moins un modulateur/démodulateur 82. La charge utile « Inter-Plateformes » est connectée à l'organe routage 50 afin de router le trafic de données des stations placées sur une plateforme à haute altitude stationnaire SHA vers la charge utile « accès station de base » 60 et la charge utile « accès station sol » 70.

L'organe de routage 50 est configuré par un centre de contrôle de réseau CCR par envoi périodique de configurations de routage. Les configurations de routage sont transmises par le centre de contrôle de réseau CCR à la station placée sur une plateforme à haute altitude SHA concernée soit directement par une station sol SS située dans sa zone de couverture, soit par une station sol SS situés dans la zone de couverture d'une autre station placée dans une plateforme à haute altitude via une liaison entre stations placées sur des plateformes à haute altitude.

L'équipement de contrôle 90 assure la commande et le contrôle des trois charges utiles 60,70,80 et l'interface avec le système d'avionique de la plateforme à haute altitude. L'équipement de contrôle 90 est connecté à l'organe de routage 50 afin de pouvoir échanger des informations avec le centre de contrôle de réseau CCR.

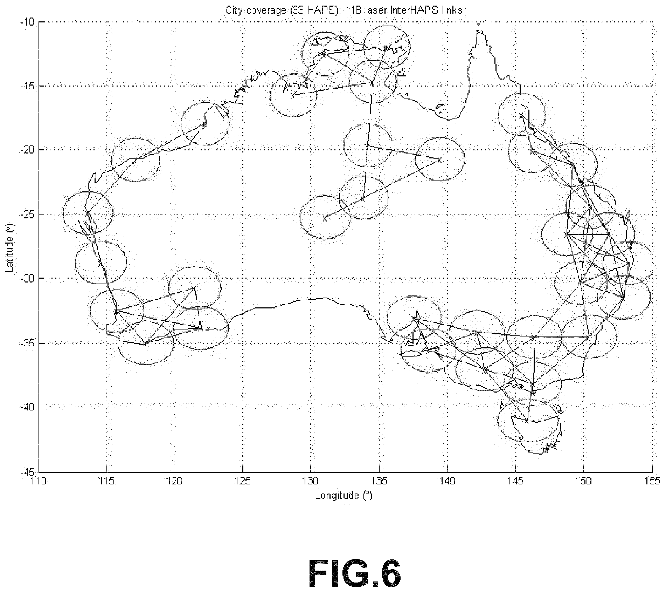

La figure 6 donne un exemple de déploiement en Australie d'un réseau intermédiaire selon l'invention. Les positions des plateformes à haute altitude sont repérées par un « x ». Les cercles représentent les zones de couverture des stations placées sur des plateformes à haute altitude. Les lignes reliant deux « x » représentent les liaisons de communication entre les stations placées sur des plateformes à haute altitude. Les stations sol ne sont pas repérées sur la figure 8. Elles sont situées à l'intérieur des cercles représentant les zones de couverture. L'exemple de réseau intermédiaire selon l'invention représenté à la figure 8 comprend 33 plateformes à haute altitude agencées en trois sous-réseaux indépendants : un sous-réseau de 8 plateformes au-dessus de la côte Ouest, un sous-réseau de 8 plateformes au Nord et un sous-réseau de 17 plateformes à l'Est et au-dessus de la Tasmanie.

## Revendications

1. Réseau intermédiaire pour système de radiocommunications comprenant :
- au moins une première station (SS_1,SS_2,SS_3) au sol adapté pour établir une liaison de communication (101,102,103) avec un réseau cœur (RC),
- une pluralité de stations de base (SB_1,SB_2,SB_3,SB-4,SB_5,SB_6) au sol,
- au moins une station placée sur une plateforme à haute altitude (SHA_1,SHA _2), configurée pour faire communiquer ladite au moins une première station au sol (SS_1,SS_2) avec au moins une station de base (SB_1,SB_2,SB_3) au sol,
- au moins une passerelle réseau embarquée dans ladite au moins une station placée sur une plateforme à haute altitude (SHA_1,SHA_2),
ladite au moins une station placée sur une plateforme à haute altitude (SHA_1,SHA_2) comprenant un organe de routage (50) pour établir au moins une route permettant à une station de base au sol de communiquer avec une première station au sol via une station placée sur une plateforme à haute altitude,
au moins une station placée sur une plateforme à haute altitude (SHA_1) étant adaptée pour établir une liaison de communication (110) avec une autre station placée sur une plateforme à haute altitude (SHA_2), ladite liaison de communication (110) étant une liaison optique en espace libre.

2. Réseau intermédiaire pour système de radiocommunications selon la revendication 1 dans lequel chaque station de base (SB_1,SB_2,SB_3,SB_4, SB_5,SB_6) au sol est adaptée pour établir une liaison de communication bidirectionnelle avec au moins un terminal utilisateur (TU_1,TU_2,TU_3,TU_4,TU_5,TU_6) de manière à ce que ledit terminal utilisateur puisse établir un accès au réseau cœur (RC) via le réseau intermédiaire.

3. Réseau intermédiaire pour système de radiocommunications selon l'une des revendications précédentes dans lequel ladite au moins une station placée sur une plateforme à haute altitude (SHA_1,SHA_2) est adaptée pour établir au moins une liaison de communication (131,132,133) avec ladite au moins une première station au sol (SS_1,SS_2,SS_3) et au moins une liaison de communication (121,122,123) avec au moins une station de base (SB_1,SB_2,SB_3).

4. Réseau intermédiaire pour système de radiocommunications selon la revendication 3 dans lequel ladite liaison de communication (131,132,133) entre ladite au moins une station placée sur la plateforme à haute altitude stationnaire (SHA_1,SHA _2) et ladite au moins une première station au sol (SS_1,SS_2,SS_3) est une liaison optique en espace libre.

5. Réseau intermédiaire pour système de radiocommunications selon l'une des revendications 3 ou 4 dans lequel ladite liaison de communication (121,122,123) entre ladite au moins une station placée sur la plateforme à haute altitude (SHA_1,SHA _2) et ladite au moins une station de base (SB_1,SB_2,SB_3) est une liaison radiofréquence ou une liaison optique en espace libre.

6. Réseau intermédiaire pour système de radiocommunications selon l'une des revendications précédentes dans lequel ladite au moins une station placée sur une plateforme à haute altitude (SHA_1) comprend un commutateur pour activer au moins une liaison de communication (110) avec l'autre station placée sur une plateforme à haute altitude (SHA_2) lorsque la liaison de communication (131) entre ladite au moins une station placée sur la plateforme à haute altitude (SHA_1) et ladite au moins une première station au sol (SS_1) est inopérante.

7. Réseau intermédiaire pour système de radiocommunications selon l'une des revendications précédentes dans lequel au moins une première station de base (SB_4,SB_6) est configurée pour établir au moins une liaison de communication (301,303) avec au moins une seconde station de base (SB_1,SB_2) lorsque ladite au moins une première station de base (SB_4,SB_6) n'est pas en portée d'une station placée sur une plateforme à haute altitude (SHA_1,SHA_2).

8. Réseau intermédiaire pour système de radiocommunications selon la revendication 7 dans lequel ladite au moins une liaison de communication (301) entre deux stations de base (SB_1,SB_4) est une liaison de communication par faisceau hertzien, ou par fibre optique ou par câble métallique.

9. Réseau intermédiaire pour système de radiocommunications selon l'une des revendications précédentes dans lequel au moins une station de base (SB_3) est adaptée pour établir une liaison de communication directe (104) avec un réseau cœur (RC).

10. Réseau intermédiaire pour système de radiocommunications selon l'une des revendications précédentes dans lequel ladite au moins une plateforme à haute altitude (SHA_1,SHA_2) est un aérostat équipé de moyens de propulsion pour rester stationnaire autour d'un point spécifié, nominal et fixe par rapport à la Terre.

11. Réseau intermédiaire pour système de radiocommunications selon l'une des revendications précédentes dans lequel ledit organe de routage (50) est commandé par un centre de contrôle de réseau (CCR) via le réseau cœur (RC) et le réseau intermédiaire.

12. Système de radiocommunications comprenant un réseau cœur (RC), une pluralité de terminaux (TU_1,TU_2,TU_3,TU_4,TU_5,TU_6) et un réseau intermédiaire selon l'une des revendications précédentes, pour permettre auxdits terminaux d'accéder au réseau cœur (RC).

## Patentansprüche

1. Zwischennetzwerk für ein Funkkommunikationssystem, umfassend:
- mindestens eine erste Station (SS_1, SS_2, SS_3) am Boden, welche geeignet ist, um eine Kommunikationsverbindung (101, 102, 103) mit einem Kern-Netzwerk (RC) herzustellen,
- eine Vielzahl von Basisstationen (SB_1, SB_2, SB_3, SB_4, SB_5, SB_6) am Boden,
- mindestens eine Station, welche auf einer Plattform in großer Höhe (SHA_1, SHA_2) platziert und konfiguriert ist, um die mindestens eine erste Station am Boden (SS_1, SS_2) mit mindestens einer Basisstation (SB_1, SB_2, SB_3) am Boden in Kommunikation zu bringen,
- mindestens ein Netzwerk-Gateway, welches in der mindestens einen auf einer Plattform in großer Höhe platzierten Station (SHA_1, SHA_2) eingebettet ist,
wobei die mindestens eine auf einer Plattform in großer Höhe platzierte Station (SHA_1, SHA_2) ein Routing-Organ (50) umfasst, um mindestens eine Route zu erstellen, welche es einer Basisstation am Boden ermöglicht, mit einer ersten Station am Boden über eine auf einer Plattform in großer Höhe platzierte Station zu kommunizieren,
wobei mindestens eine auf einer Plattform in großer Höhe platzierte Station (SHA_1) geeignet ist, um eine Kommunikationsverbindung (110) mit einer anderen auf einer Plattform in großer Höhe platzierten Station (SHA_2) herzustellen, wobei die Kommunikationsverbindung (110) eine optische Verbindung im freien Raum ist.

2. Zwischennetzwerk für ein Funkkommunikationssystem nach Anspruch 1, wobei jede Basisstation (SB_1, SB_2, SB_3, SB_4, SB_5, SB_6) am Boden geeignet ist, um eine bidirektionale Kommunikationsverbindung mit mindestens einem Benutzerendgerät (TU_1, TU_2, TU_3, TU_4, TU_5, TU_6) in einer Weise herzustellen, dass das Benutzerendgerät einen Zugang zum Kern-Netzwerk (RC) über das Zwischennetzwerk herstellen kann.

3. Zwischennetzwerk für ein Funkkommunikationssystem nach einem der vorhergehenden Ansprüche, wobei die mindestens eine auf einer Plattform in großer Höhe platzierte Station (SHA_1, SHA_2) geeignet ist, um mindestens eine Kommunikationsverbindung (131, 132, 133) mit der mindestens einen ersten Station am Boden (SS_1, SS_2, SS_3) und mindestens eine Kommunikationsverbindung (121, 122, 123) mit mindestens einer Basisstation (SB_1, SB_2, SB_3) herzustellen.

4. Zwischennetzwerk für ein Funkkommunikationssystem nach Anspruch 3, wobei die Kommunikationsverbindung (131, 132, 133) zwischen der mindestens einen auf der stationären Plattform in großer Höhe platzierten Station (SHA_1, SHA_2) und der mindestens einen ersten Station am Boden (SS_1, SS_2, SS_3) eine optische Verbindung im freien Raum ist.

5. Zwischennetzwerk für ein Funkkommunikationssystem nach einem der Ansprüche 3 oder 4, wobei die Kommunikationsverbindung (121, 122, 123) zwischen der mindestens einen auf der Plattform in große Höhe platzierten Station (SHA_1, SHA_2) und der mindestens einen Basisstation (SB_1, SB_2, SB_3) eine Funkfrequenzverbindung oder eine optische Verbindung im freien Raum ist.

6. Zwischennetzwerk für ein Funkkommunikationssystem nach einem der vorhergehenden Ansprüche, wobei die mindestens eine auf einer Plattform in großer Höhe platzierte Station (SHA_1) einen Umschalter umfasst, um mindestens eine Kommunikationsverbindung (110) mit der anderen auf einer Plattform in großer Höhe platzierten Station (SHA_2) zu aktivieren, wenn die Kommunikationsverbindung (131) zwischen der mindestens einen auf der Plattform großer Höhe platzierten Station (SHA_1) und der mindestens einen ersten Station am Boden (SS_1) nicht betriebstüchtig ist.

7. Zwischennetzwerk für ein Funkkommunikationssystem nach einem der vorhergehenden Ansprüche, wobei mindestens eine erste Basisstation (SB_4, SB_6) konfiguriert ist, um mindestens eine Kommunikationsverbindung (301, 303) mit mindestens einer zweiten Basisstation (SB_1, SB_2) herzustellen, wenn die mindestens eine erste Basisstation (SB_4, SB_6) nicht in Reichweite einer Station ist, welche auf einer Plattform in großer Höhe (SHA_1, SHA_2) platziert ist.

8. Zwischennetzwerk für ein Funkkommunikationssystem nach Anspruch 7, wobei die mindestens eine Kommunikationsverbindung (301) zwischen zwei Basisstationen (SB_1, SB_4) eine Kommunikationsverbindung über Richtfunk oder über Lichtwellenleiter oder über Metallkabel ist.

9. Zwischennetzwerk für ein Funkkommunikationssystem nach einem der vorhergehenden Ansprüche, wobei mindestens eine Basisstation (S6_3) geeignet ist, um eine direkte Kommunikationsverbindung (104) mit einem Kern-Netzwerk (RC) herzustellen.

10. Zwischennetzwerk für ein Funkkommunikationssystem nach einem der vorhergehenden Ansprüche, wobei die mindestens eine Plattform in großer Höhe (SHA_1, SHA_2) ein Luftballon ist, welcher mit Antriebsmitteln ausgerüstet ist, um stationär um einen spezifizierten Soll-Fixpunkt in Bezug auf die Erde zu bleiben.

11. Zwischennetzwerk für ein Funkkommunikationssystem nach einem der vorhergehenden Ansprüche, wobei das Routing-Organ (50) durch ein Netzwerksteuerungszentrum (CCR) über das Kern-Netzwerk (RC) und das Zwischennetzwerk gesteuert wird.

12. Funkkommunikationssystem, welches ein Kern-Netzwerk (RC), eine Vielzahl von Endgeräten (TU_1, TU_2, TU_3, TU_4, TU_5, TU_6) und ein Zwischennetzwerk nach einem der vorhergehenden Ansprüche umfasst, um es den Endgeräten zu ermöglichen, auf das Kern-Netzwerk (RC) zuzugreifen.

## Claims

1. An intermediate network for a radiocommunication system comprising:
- at least one first ground station (SS_1, SS_2, SS_3) designed to establish a communication link (101, 102, 103) with a core network (RC),
- a plurality of ground base stations (SB_1, SB_2, SB_3, SB_4, SB_5, SB_6),
- at least one station placed on a high-altitude platform (SHA_1, SHA_2), configured so as to put said at least one first ground station (SS_1, SS_2) into communication with at least one ground base station (SB_1, SB_2, SB_3),
- at least one network gateway housed in said at least one station placed on a high-altitude platform (SHA_1, SHA_2),
said at least one station placed on a high-altitude platform (SHA_1, SHA_2) comprising a routing organ (50) for establishing at least one route allowing a ground base station to communicate with a first ground station via a station placed on a high-altitude platform,
at least one station placed on a high-altitude platform (SHA_1) being designed to establish a communication link (110) with another station placed on a high-altitude platform (SHA_2), said communication link (110) being a free-space optical link.

2. The intermediate network for a radiocommunication system according to claim 1, wherein each ground base station (SB_1, SB_2, SB_3, SB_4, SB_5, SB_6) is designed to establish a bidirectional communication link with at least one user terminal (TU_1, TU_2, TU_3, TU_4, TU_5, TU_6) such that said user terminal is able to establish an access to the core network (RC) via the intermediate network.

3. The intermediate network for a radiocommunication system according to either of the preceding claims, wherein said at least one station placed on a high-altitude platform (SHA_1, SHA_2) is designed to establish at least one communication link (131, 132, 133) with said at least one first ground station (SS_1, SS_2, SS_3) and at least one communication link (121, 122, 123) with at least one base station (SB_1, SB_2, SB_3).

4. The intermediate network for a radiocommunication system according to claim 3, wherein said communication link (131, 132, 133) between said at least one station placed on the stationary high-altitude platform (SHA_1, SHA_2) and said at least one first ground station (SS_1, SS_2, SS_3) is a free-space optical link.

5. The intermediate network for a radiocommunication system according to either of claims 3 or 4, wherein said communication link (121, 122, 123) between said at least one station placed on the high-altitude platform (SHA_1, SHA_2) and said at least one base station (SB_1, SB_2, SB_3) is a radiofrequency link or a free-space optical link.

6. The intermediate network for a radiocommunication system according one of the preceding claims, wherein said at least one station placed on a high-altitude platform (SHA_1) comprises a switch for activating at least one communication link (110) with the other station placed on a high-altitude platform (SHA_2) when the communication link (131) between said at least one station placed on the high-altitude platform (SHA_1) and said at least one first ground station (SS_1) is inoperative.

7. The intermediate network for a radiocommunication system according to one of the preceding claims, wherein at least one first base station (SB_4, SB_6) is configured so as to establish at least one communication link (301, 303) with at least one second base station (SB_1, SB_2) when said at least one first base station (SB_4, SB_6) is not within range of a station placed on a high-altitude platform (SHA_1, SHA_2).

8. The intermediate network for a radiocommunication system according to claim 7, wherein said at least one communication link (301) between two base stations (SB_1, SB_4) is a microwave-link, fiber-optic or metal cable communication link.

9. The intermediate network for a radiocommunication system according to one of the preceding claims, wherein at least one base station (SB_3) is designed to establish a direct communication link (104) with a core network (RC).

10. The intermediate network for a radiocommunication system according to one of the preceding claims, wherein said at least one high-altitude platform (SHA_1, SHA_2) is an aerostat equipped with propulsion means for remaining stationary around a specified, nominal point that is fixed relative to the Earth.

11. The intermediate network for a radiocommunication system according to one of the preceding claims, wherein said routing organ (50) is controlled by a network control center (CCR) via the core network (RC) and the intermediate network.

12. A radiocommunication system comprising a core network (RC), a plurality of terminals (TU_1, TU_2, TU_3, TU_4, TU_5, TU_6) and an intermediate network according to one of the preceding claims, allowing said terminals to access the core network (RC).
